(19) Europäisches Patentamt
European Patent Office
Office européen des brevets

(11) EP 1 299 478 B1

(12) FASCICULE DE BREVET EUROPEEN

(45) Date de publication et mention de la délivrance du brevet:
**01.03.2006 Bulletin 2006/09**

(21) Numéro de dépôt: **01960313.3**

(22) Date de dépôt: **15.06.2001**

(51) Int Cl.:
*C08L 77/00* (2006.01) *C08L 101/00* (2006.01)
*C08L 77/02* (2006.01) *C08L 77/06* (2006.01)
*C08G 83/00* (2006.01) *C08G 81/00* (2006.01)
*C08G 69/48* (2006.01)

(86) Numéro de dépôt international:
**PCT/EP2001/006736**

(87) Numéro de publication internationale:
**WO 2001/096474 (20.12.2001 Gazette 2001/51)**

# (54) POLYAMIDES MODIFIES, COMPOSITIONS A BASE DE CES POLYAMIDES ET COMPOSES MACROMOLECULAIRES UTILES POUR LEUR OBTENTION

MODIFZIERTE POLYAMIDE, IHRE ZUSAMMENSETZUNGEN UND MACROMOLEKULARE VERBINDUNGEN ZU IHRER HERSTELLUNG

MODIFIED POLYAMIDES, COMPOSITIONS BASED ON SAME AND MACROMOLECULAR COMPOUNDS USED TO OBTAIN THEM

(84) Etats contractants désignés:
**AT BE CH CY DE DK ES FI FR GB GR IE IT LI LU MC NL PT SE TR**

(30) Priorité: **16.06.2000 FR 0007706**

(43) Date de publication de la demande:
**09.04.2003 Bulletin 2003/15**

(73) Titulaire: **Rhodia Engineering Plastics Srl**
**20020 Ceriano Laghetto (MI) (IT)**

(72) Inventeurs:
- **PEDUTO, Nicolangelo**
  **I-20031 CESANO MADERNO (IT)**
- **SPERONI, Franco**
  **I-ITALIE CERIANO LAGHETTO (IT)**
- **ZHANG, Haichun**
  **I-20025 Legano (MI) (IT)**

(74) Mandataire: **Esson, Jean-Pierre**
**Rhodia Services,**
**Direction de la Propriété Industrielle,**
**Centre de Recherches de Lyon**
**BP 62**
**85, avenue des Frères Perret**
**69192 Saint-Fons Cédex (FR)**

(56) Documents cités:
**EP-A- 0 672 703**
**FR-A- 2 743 077**
**FR-A- 2 766 197**
**FR-A- 2 779 730**

Il est rappelé que: Dans un délai de neuf mois à compter de la date de publication de la mention de la délivrance du brevet européen, toute personne peut faire opposition au brevet européen délivré, auprès de l’Office européen des brevets. L’opposition doit être formée par écrit et motivée. Elle n’est réputée formée qu’après paiement de la taxe d’opposition. (Art. 99(1) Convention sur le brevet européen).

EP 1 299 478 B1

## Description

La présente invention concerne des polyamides modifiés par un composé multifonctionnel. Les articles finis mis en forme à partir de ces polyamides ou de compositions à base de ces polyamides présentent d'excellentes propriétés mécaniques, ainsi qu'un très bon aspect de surface. L'invention concerne également un composé macromoléculaire utile pour l'obtention de ces polyamides.

Dans le domaine des plastiques techniques, on cherche souvent à modifier les compositions polymères afin de conférer des propriétés intéressantes aux articles mis en forme à partir de ceux-ci ou de compositions les comprenant. Les propriétés mécaniques et l'aspect de surface des articles sont des exemples de propriétés observées sur les articles.

Les compositions polymères comprennent souvent des charges destinées à modifier les propriétés mécaniques ou à diminuer les coûts du matériau. Si les charges sont présentes en grande quantité, l'aspect de surface des articles obtenus peut devenir insatisfaisant.

Le brevet FR 98 15878 (2 743 077) décrit des compositions comprenant des charges et un polyamide modifié par un composé multifonctionnel. Le polyamide présente au moins en partie une structure macromoléculaire en forme d'étoile avec des motifs de répétitions de type polyamide 6. De tels composés sont appelés polyamides étoiles. Ces polyamides présentent une fluidité élevée, ce qui permet d'augmenter le taux de charge dans la composition sans détérioration de l'aspect de surface, c'est-à-dire sans que les charges puissent être observées à la surface des articles. Le polyamide est obtenu par copolymérisation d'un composé multifonctionnel avec des monomères de type amino-acides ou lactames. Le brevet décrit l'utilisation de mélanges de ces compositions avec du polyhexaméthylène adipamide, comme matrices de compositions contenant des charges.

Les articles réalisés à partir de compositions comprenant une charge et une matrice constituée d'un polymère modifié conformément à ces documents présentent de bonnes propriétés mécaniques, et une surface qui ne laisse pas apparaître les charges. Toutefois l'aspect de surface est terne.

Dans de nombreux domaines, par exemple dans le domaine de la carrosserie automobile, on cherche à obtenir des articles dont l'aspect de surface est brillant ou à la surface desquels on observe une bonne réflexivité de la lumière.

La présente invention a pour objectif de proposer un polyamide modifié nouveau, qui, lorsqu'il est utilisé comme matrice avec des charges, permet d'obtenir des articles dont les surfaces présentent une bonne réflexivité. L'invention a donc également pour objectif de proposer des compositions chargées présentant un excellent aspect de surface. L'invention propose également un procédé d'obtention de telles compositions.

L'invention a aussi pour objet de proposer un composé macromoléculaire pouvant être utilisé dans des compositions polymères, et plus particulièrement dans des compositions polyamides, et qui leur confère des propriétés modifiées.

A cet effet l'invention propose en premier lieu un polyamide modifié obtenu par mélange en fondu d'au moins les deux composés suivants :

- Composé A : un polyamide présentant des unités récurrentes dont les formules sont choisies parmi les formuLes (I) et (II) suivantes:

  $-[NH-R_1-NH-OC-R_2-CO]-$ (I)

  $-[NH-R_3-CO]-$ (II)

  les radicaux $R_1$, $R_2$, $R_3$ étant des radicaux hydrocarbonés, comportant éventuellement des hétéroatomes
- Composé B : un composé macromoléculaire polyamide comprenant des chaînes macromoléculaires étoiles ou H, susceptible d'être obtenu par un procédé choisi parmi les deux procédés suivants :

  - Procédé A: copolymérisation d'un lactame et/ou d'un aminoacide avec un composé multifonctionnel et éventuellement des composés bifonctionnels ou monofonctionnels ,
  - Procédé B: mélange en fondu d'un composé multifonctionnel et d'un polyamide du type de ceux obtenus par polycondensation de lactames et/ou d'aminoacides,

  le composé multifonctionnel comprenant au moins trois fonctions réactives choisies parmi les amines, les acides carboxyliques, et leurs dérivés, les fonctions réactives étant identiques, la concentration équivalente molaire en fonctions réactives du composé multifonctionnel dans le composé B étant supérieure à 8%.

Les chaînes macromoléculaires étoiles ou H comportent un coeur et au moins trois branches polyamides. Les branches sont liées au coeur par une liaison covalente, par l'intermédiaire d'un groupement amide ou d'un groupement d'une autre nature. Le coeur est un composé chimique organique ou organométallique, de préférence un composé

hydrocarboné comportant éventuellement des hétéroatomes et auquel sont reliées les branches. Les branches sont des chaînes polyamides. Elles peuvent présenter des branchements, c'est notamment le cas pour les structures en H. Les chaînes polyamides constituant les branches sont de préférence du type de celles obtenues par polymérisation des lactames ou aminoacides, par exemple de type polyamide 6. A titre indicatif des composés présentant une structure dite "H" sont par exemple décrits dans le document US 5959069.

Le composé B comprend éventuellement, outre les chaînes étoiles, des chaînes macromoléculaires polyamides linéaires. Le rapport en poids entre la quantité de chaînes étoiles dans la matrice et la somme des quantités de chaînes étoiles et linéaire est compris entre 1 et 0,1, bornes incluses. Il est de préférence compris entre 0,9 et 0,6.

Le procédé de mélange en phase fondue consiste à mettre en présence les composés à une température supérieure à la température de fusion du moins fusible d'entre-eux. Cette température est de préférence supérieure à 250°C.

Selon un mode de réalisation particulièrement avantageux le mélange en phase fondue est réalisé à l'aide d'un dispositif d'extrusion, par exemple un dispositif à vis simple ou à double vis.

De tels dispositifs sont couramment utilisés dans les domaines de la formulation des plastiques techniques et sont bien connus de l'homme du métier. Ils sont adaptés au mélange en phase fondu des composés A et B et à la mise en oeuvre du procédé B.

Une des caractéristiques des polyamides selon l'invention est la concentration équivalente molaire en fonctions terminales du composé B. Cette grandeur est représentative de la quantité de modificateur introduite, par rapport aux unités récurrentes linéaires ou aux monomères conduisant à des unités récurrentes linéaires. Cette grandeur, notée $\alpha$, est définie des deux manières suivantes, selon le procédé d'obtention du composé B:

- Procédé A:

$$\alpha = f * \frac{m_C / M_C}{0{,}9 * m_L / M_L + m_C / M_C}$$

- Procédé B:

$$\alpha = f * \frac{m_C / M_C}{m_{PA} / M_{PA} + m_C / M_C}$$

dans laquelle:

- f est le nombre de fonctions réactives du composé multifonctionnel
- $m_L$ est la masse de lactame et/ou aminoacide utilisé pour l'obtention du composé B selon le procédé A
- $m_{PA}$ est la masse de polyamide utilisé pour l'obtention du composé B selon le procédé B
- $m_C$ est la masse de composé muttifonctionnel utilisé pour l'obtention du composé B selon les procédés A ou B.
- $M_L$ est la masse molaire du lactame et/ou aminoacide
- $M_{PA}$ est la masse molaire d'une unité récurrente du polyamide utilisé pour l'obtention du composé B selon le procédé B
- $M_C$ est la masse molaire du composé C.

On définit également une concentration équivalente molaire en fonctions réactives du composé multifonctionnel par rapport aux composés A et B. Cette grandeur est représentative de la quantité de modificateur introduite dans le mélange des composés A et B. Cette grandeur, notée $\beta$, est définie des deux manières suivantes, selon le procédé d'obtention du composé B:

$$\beta = \frac{\alpha * {}^{m_B}/_{M_B}}{{}^{m_A}/_{M_A} + {}^{m_B}/_{M_B}}$$

dans laquelle

- $m_B$, et $m_a$ sont respectivement les masses des composés B et A.
- $M_A$ une masse molaire caractéristique du composé A, $M_A$ étant égale à la masse molaire d'une unité récurrente de polyamide représenté par la formule (II), $M_A$ étant égale à la moitié de la masse molaire d'une unité récurrente de polyamide représenté par la formule (I)
- $M_B$ est une masse molaire caractéristique du composé B, $M_B$ étant égale à la masse molaire de l'unité récurrente correspondant au lactame et/ou aminoacide utilisé pour le procédé A, $M_B$ étant égale à la masse molaire d'une unité récurrente de polyamide utilisé pour le procédé B.

Selon une caractéristique préférentielle de l'invention la concentration équivalente molaire en fonctions réactives du composé multifonctionnel par rapport aux composés A et B est supérieure à 1%.

Selon une autre caractéristique préférentielle de l'invention le composé.B présente un indice de fluidité mesuré selon la norme ISO 1133 à 275°C sous 100 g de charge supérieur à 100 g/10 min.

Selon une autre caractéristique préférentielle la proportion pondérale de composé A dans les mélange de composé A et B est supérieure à 50%.

Le composé A peut être avantageusement choisi parmi le polyamide 6, le polyamide 11, le polyamide 12, le polyamide 66, le polyamide 6.12, le polyamide 4.6, le polyamide 6.10, le polyamide 6.36, le polytéréphtalamide, leurs mélanges et copolymères.

Selon un mode préférentiel de l'invention, le composé A est un polyamide 6 ou 66 comprenant au moins 95% en mole de motifs récurrents respectivement du PA 6 ou du PA 66. En particulier le composé A peut comprendre des motifs récurrents respectivement du PA 66 ou du PA6.

Selon le mode de réalisation particulier où le composé A est un polyamide du type de ceux dont les unités récurrentes sont représentées par la formule (1), le polyamide modifié présente d'excellentes propriétés thermomécaniques, ainsi qu'une fluidité importante. Les polyamides modifiés selon ce mode de réalisation ou les compositions comprenant ces polyamides présentent en particulier une température de déformation sous charge élevée.

Cette propriété entre autres peut rendre le matériau apte à supporter des procédés de mise en peinture par cataphorèse. Les compositions sont donc particulièrement adaptées pour la réalisation de pièces de carrosserie.

L'invention concerne aussi des compositions comportant des charges, de préférence des charges minérales, et une matrice constituée du polyamide modifié. La proportion pondérale des charges dans la composition est de préférence comprise entre 25 et 80 %. Les compositions chargées peuvent être réalisées par introduction des charges en fondu dans un dispositif d'extrusion, lors de la réalisation du mélange des composés A, B ou ultérieurement par refusion ou extrusion d'un polyamide modifié obtenu par mélange des composés A, B.

Les charges minérales préférées sont choisies parmi les fibres de verre, les fibres de carbone, les fibres de céramiques, le talc, le kaolin, la wollastonite, les argiles exfoliées.

Les compositions peuvent contenir d'autres additifs tels que des ignifugeants, des lubrifiants, des stabilisants wollastoniques, des composés modificateurs de la résilience, les pigments, les colorants, les antioxydants, les plastifiants.

A titre d'exemple de composés ignifugeants, on peut citer le phosphore rouge, les dérivés de la mélamine tels que les mélamines phosphate, polyphosphate ou pyrophosphate, les composés halogénés, plus particulièrement bromés, les composés à base d'hydroxyde de magnésium.

A titre d'exemples de composés modificateurs de la résilience, on peut citer les élastomères, éventuellement greffés par de l'anhydride maléique, tels que les EPDM, les EPR, les SEBS, les élastomères silicones, les caoutchoucs nitriles.

Ces exemples n'ont aucun caractère limitatif.

De nombreux composés multifonctionnels peuvent être utilisés pour la réalisation de l'invention. Ces composés sont des composés organiques ou organo-métalliques présentant au moins trois fonctions chimiques réactives, toutes les fonctions réactives étant identiques. Ces fonctions sont choisies parmi les amines, les acide carboxyliques et leurs dérivés. Par fonction réactive, on entend une fonction susceptible de réagir avec une fonction terminale des chaînes polyamides des composés A et/ou B. Ces fonctions sont par exemple susceptibles de former des liaisons amides.

Les composés multifonctionnels peuvent être choisis parmi les composés présentant une structure arborescente ou dendritique

Les composés multifonctionnels peuvent également être choisis parmi les composés de formule (III)

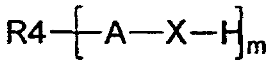 (III)

dans laquelle

- A est une liaison covalente ou un radical hydrocarboné aliphatique pouvant comprendre des hétéroatomes, et comprenant de 1 à 20 atomes de carbone, de préférence de 1 à 6 atomes de carbone.
- X est un radical

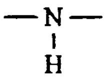 ou 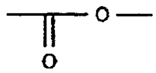

- $R_4$ est un radical hydrocarboné comprenant au moins 2 atomes de carbone, linéaire ou cyclique, aromatique ou aliphatique et pouvant comprendre des hétéroatomes.
- m est un nombre entier compris entre 3 et 8 (bornes incluses)

Selon encore une autre caractéristique préférée, le radical $R_4$ est soit un radical cyctoaliphatique tel que le radical tétravalent de cyclohexanonyle, soit un radical 1,1,1-triyle-propane, 1,2,3-triyle-propane.

Comme autres radicaux $R_4$ convenables pour l'invention on peut citer, à titre d'exemple, les radicaux trivalents de phényle et cyclohexanyte substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Le radical A est, de préférence, un radical méthylénique ou polyméthylénique tel que les radicaux éthyle, propyle ou butyle, ou un radical polyoxyalkylènique tel que le radical polyoxyéthylènique.

Selon un mode de réalisation préféré de l'invention, le nombre m est supérieur à 3 et avantageusement égal à 3 ou 4.

La fonction réactive du composé multifonctionnel représentée par le symbole X-H est une fonction capable de former une fonction amide.

A titre d'exemple de composés polyfonctionnels de formule III, on peut citer la 2,2,6,6-tétra-(β-carboxyéthyl) cyclohexanone, le diaminopropane - N,N,N',N' acide tétraacétique de formule suivante :

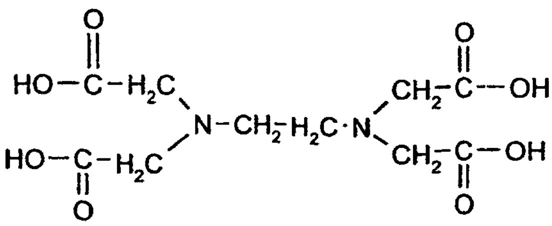

ou les composés provenant de la réaction du triméthylol propane ou du glycérol avec l'oxyde de propylène et amination des groupes hydroxyles terminaux, ces derniers composés sont commercialisés sous le nom commercial JEFFAMINES T® par la société HUNTSMAN, et ont comme formule générale :

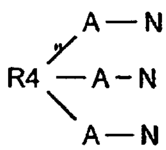

Dans laquelle :

- $R_4$ représente un radical 1,1,1-triyle propane, ou 1,2,3-triyle propane,
- A représente un radical polyoxyéthylénique.

Des exemples de composés multifonctionnels pouvant convenir sont notamment cités dans le document US 5346984, dans le document US 5959069, dans le document WO 9635739, dans le document EP 672703.
On cite plus particulièrement:

Les nitrilotriaikylamines, en particulier la nitrilotriéthylamine, les dialkylènetriamines, en particulier la diéthylènetriamine, les trialkylènetétramines et tétraalkylènepentamines, l'alkylène étant de préférence l'éthylène, la 4-aminoéthyl-1,8,octanediamine.

On cite aussi les dendrimères de formule (II)

$$(R_2\ N\text{-}(CH_2)_n)_2\text{-}N\text{-}(CH_2)_x\text{-}N\text{-}((CH_2)_n\text{-}NR_2)_2 \qquad (II)$$

dans laquelle
R est un atome d'hydrogène ou un groupement $-(CH_2)_n -NR^1_2$ où
$R^1$ est un atome d'hydrogène ou un groupement $-(CH_2)_n -NR^2_2$ où
$R^2$ est un atome d'hydrogène ou un groupement $-(CH_2)_n -NR^3_2$ où
$R^3$ est un atome d'hydrogène ou un groupement $-(CH_2)_n -NH_2$,
n étant un entier compris entre 2 et 6
x étant un entier compris entre 2 et 14.
n est de préférence un entier compris entre 3 et 4, en particulier 3, et x est de préférence un entier compris entre 2 et 6, de préférence compris entre 2 et 4, en particulier 2. Chaque radical R peut être choisi indépendamment des autres. Le radical R est de préférence un atome d'hydrogène ou un groupement $-(CH_2)_n$-NH2.
On cite aussi les composés multifonctionnels présentant 3 à 10 groupements acide carboxylique, de préférence 3 ou 4. Parmi ceux-ci on préfère les composés présentant un cycle aromatique et/ou hétérocyclique, par exemple des radicaux benzyl, naphtyl, anthracényl, biphényl et triphényl, ou les hétérocycles comme les pyridine, bipyridine, pyrrole, indole, furane, thiophène, purine, quinoléine, phénanthrène, porphyrine, phtalocyanine et naphtalocyanine. On préfère tout particulièrement l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, plus particulièrement encore l'acide trimésique et l'acide 1,2,4,5-benzènetétracarboxylique.
On cite aussi, les composés multifonctionnels dont le coeur est un hétérocycle présentant un point de symétrie, comme les 1,3,5-triazines, 1,4-diazines, la mélamine, les composés dérivés de la 2,3,5,6-tétraéthylpipérazine, des 1,4-pipérazines, des tétrathiafulvalènes. On cite plus particulièrement l'acide 2,4,6-triaminocaproïque-1,3,5-triazine (TACT).
L'invention concerne également un composé macromoléculaire nouveau, et pouvant notamment être utilisé pour l'obtention de polymères modifiés, par exemple pour l'obtention de polyamides modifiés. Le composé macromoléculaire comprend des chaînes macromoléculaires étoiles et éventuellement des chaînes macromoléculaires linéaires. Il est obtenu par copolymérisation d'un lactame et/ou d'un aminoacide avec un composé multifonctionnel et éventuellement des composés bifonctionnels ou monofonctionnels, le composé multifonctionnel comprenant au moins trois fonctions réactives choisies parmi les amines, de acides carboxyliques, et leurs dérivés, les fonctions réactives étant identiques, la concentration équivalente molaire en fonctions réactives du composé multifonctionnel dans le composé étant supérieure à 8%.
On préfère tout particulièrement les composés obtenus à partir de caprolactame. Selon une autre caractéristique on préfère le composés dont l'indice de fluidité en phase fondue mesuré selon la norme ISO 1133 à 275°C sous 100 g de charge est supérieure à 100 g/10 min.
Des composés multifonctionnels pouvant être utilisés pour leur obtention ont été décrits précédemment.
D'autres détails ou avantages de l'invention apparaîtront plus clairement au vu des exemples donnés ci-dessous uniquement à titre indicatif.

Composés utilisés:

Composé A1: un polyamide 66 de viscosité relative (acide formique) de 50, commercialisé par la société Rhodia Engineering Plastics.

Composé B1: un polyamide étoile préparé comme mentionné ci-dessous:

Une polymérisation est réalisée dans un autoclave chauffé et comprenant des moyens d'agitation.
11330 g de caprolactame et 1750 g de 2,2,6,6-tétra-(β-Carboxyéthyl)cycfohexanone sont ajoutés dans l'autoclave avec 350 g d'eau distillée.
Le composé de cyclohexanone et son procédé de synthèse sont décrits dans l'article "The Chemistry of Acrylonitrile II - Reactions with Ketones" JACS 64 2850 (1942) de Herman Alexander Buison et Thomas W. Riener.
Le mélange, mis sous agitation, est chauffé à une température de 265°C sous 6 bars.
Il est maintenu à cette température et pression pendant 2 heures.
La pression est ensuite diminuée, puis un balayage de l'autoclave par l'azote est réalisé pendant des durées variables, tout en maintenant la température à 265°C.
Le composé macromoléculaire fondu obtenu est coulé dans un gros volume d'eau à 0°C, sous agitation. On obtient une poudre.
La poudre est lavée avec de l'eau distillée pendant environ 16 heures pour éliminer le caprolactame non polymérisé et séché à 100°C sous vide pendant 48 heures.
On mesure l'indice de fluidité MFI: 202 g/10 min.

Composé B2: un polyamide étoile préparé comme mentionné ci-dessous:

Une polymérisation est réalisée dans un autoclave chauffé et comprenant des moyens d'agitation.
11300 g de caprolactame et 175g de 2,2,6,6-tétra-(β-carboxyéthyl)cyclohexanone sont ajoutés dans l'autoclave avec 350 g d'eau distillée.
Le composé de cyclohexanone et son procédé de synthèse sont décrits dans l'article "The Chemistry of Acrylonitrile 11- Reactions with Ketones" JACS 64 2850 (1942) de Herman Alexander Buison et Thomas W. Riener.
Le mélange, mis sous agitation, est chauffé à une température de 265°C sous 6 bars.
Il est maintenu à cette température et pression pendant 2 heures.
La pression est ensuite diminuée, puis un balayage de l'autoclave par l'azote est réalisé pendant des durées variables, tout en maintenant la température à 265°C.
Le polymère fondu est ensuite extrudé sous forme de jonc puis refroidi rapidement à l'eau et découpé en granulés.
Ces granulés sont lavés avec de l'eau distillée pendant environ 16 heures pour éliminer le caprolactame non polymérisé et séché à 100°C sous vide pendant 48 heures.
On mesure l'indice de fluidité MFI: 25 g/10 min.

Composé B3: un polyamide 6 de viscosité relative (acide sulfurique) de 2,7, commercialisé par la société Rhodia Engineering Plastics.

Composé C: Wollastonite wicroll 10 PA.

Composé D: lubrifiant et noir de carbone

Evaluations

- Indice de fluidité MFI déterminé selon la norme ISO 1133 à 275°C sous 100 g de charge.
- L'aspect de surface est observé sur des éprouvettes en forme de plaques de 15 cm sur 10 cm, de 5 mm d'épaisseur. Deux critères sont évalués visuellement : l'observation de charges à la surface des plaques, et la réflexivité de la plaque.

Exemples

Les compositions sont obtenues par mélange en extrudeuse bi-vis de type WERNER et PFLEIDERER ZSK.

Les compositions réalisées sont détaillées dans le tableau I. Les proportions sont indiquées en pourcentages en poids dans la composition.

Tableau I

| Composé | Exemple 1 | Exemple 2* | Exemple 3* | Exemple 4* |
|---|---|---|---|---|
| A1 | 38,7 | 38,7 | 38,7 | 38,7 |
| B1 | 20 | 0 | 0 | 0 |
| B2 | 0 | 20 | 0 | 0 |
| B3 | 0 | 0 | 20 | 0 |
| C | 40 | 40 | 40 | 40 |
| D | 1,3 | 1,3 | 1,3 | 1,3 |
| * comparatif | | | | |

Les propriétés sont mentionnées dans le tableau II

Tableau II

| Propriété | Exemple 1 | Exemple 2* | Exemple 3* | Exempte 4* |
|---|---|---|---|---|
| Observation des charges à la surface | NON | OUI | OUI | OUI |
| Reflexivité | OUI | NON | NON | NON |
| Concentration équivalente molaire en fonctions réactives du composé multifonctionnel dans le composé B | 20% | 2% | 0% | 0% |
| Concentration équivalente molaire en fonctions réactives du compose multifonctionnel dans le mélange A et B | 7% | 0,7% | 0% | 0% |
| * comparatif | | | | |

Ces exemples montrent que des compositions à base de polyamide 66 modifiées par introduction en fondu polyamide étoile obtenu avec de fortes quantités de composé multifonctionnel ont un aspect de surface amélioré.

## Revendications

**1.** Polyamide modifié obtenu par mélange en fondu d'au moins les deux composés suivants :

• Composé A : un polyamide présentant des unités récurrentes dont les formules sont choisies parmi les formules (I) et (II) suivantes:

$$-[NH-R_1-NH-OC-R_2-CO]- \qquad (I)$$

$$-[NH-R_3-CO]- \qquad (II)$$

les radicaux $R_1$, $R_2$, $R_3$ étant des radicaux hydrocarbonés, comportant éventuellement des hétéroatomes
• Composé B : un composé macromoléculaire polyamide comprenant des chaînes macromoléculaires étoiles ou H. susceptible d'être obtenu par un procédé choisi parmi les deux procédés suivants :

- Procédé A: copolymérisation d'un lactame et/ou d'un aminoacide avec un composé multifonctionnel et éventuellement des composés bifonctionnels ou monofonctionnels,
- Procédé B: mélange en fondu d'un composé multifonctionnel et d'un polyamide du type de eaux obtenus par polycondensation de lactames et/ou d'aminoacides,
le composé multifonctionnel comprenant au moins trois fonctions réactives choisies parmi les amines, les acides carboxyliques, et leurs dérivés, les fonctions réactives étant identiques, la concentration équivalente

molaire en fonctions réactives du composé multifonctionnel dans le composé B étant supérieure à 8%;

ladite concentration, notée $\alpha$, est définie des deux manières suivantes, selon le procédé d'obtention du composé B :

- Procédé A:

$$\alpha = f * \frac{m_C / M_C}{0{,}9 * m_L / M_L + m_C / M_C}$$

- Procédé B:

$$\alpha = f * \frac{m_C / M_C}{m_{PA} / M_{PA} + m_C / M_C}$$

dans laquelle:

- f est le nombre de fonctions réactives du composé multifonctionnel
- $m_L$ est la masse de lactame et/ou aminoacide utilisé pour l'obtention du composé B selon le procédé A
- $m_{PA}$ est la masse de polyamide utilisé pour robtention du composé B selon le procédé B
- $m_C$ est la masse de composé multifonctionnel utilisé pour robtention du composé B selon tes procédés A ou B.
- $M_L$ est la masse molaire du lactame et/ou aminoacide
- $M_{PA}$ est la masse molaire d'une unité récurrente du polyamide utilisé pour l'obtention du composé B selon le procédé B
- $M_C$ est la masse molaire du composé C.

**2.** Polyamide modifié selon la revendication 1, **caractérisé en ce que** la concentration équivalente molaire en fonctions réactives du composé multifonctionnel par rapport aux composés A et B est supérieure à 1%;
ladite concentration, notée $\beta$, est définie des deux manières suivantes, selon le procédé d'obtention du composé B :

$$\beta = \frac{\alpha * m_B / M_B}{m_A / M_A + m_B / M_B}$$

dans laquelle

- $m_B$, et $M_a$ sont respectivement les masses des composés B et A.
- $M_A$ une masse molaire caractéristique du composé A, $M_A$ étant égale à la masse molaire d'une unité récurrente de polyamide représenté par la formule (II), $M_A$ étant égale à la moitié de la masse molaire d'une unité récurreme de polyamide représenté par la formule (I)
- $M_B$ est une masse molaire caractéristique du compose B, $M_B$ étant égale à la masse molaire de l'unité récurrente correspondant au lactame et/ou aminoacide utilisé pour le procédé A, $M_B$ étant égale à la masse molaire d'une unité récurrente de polyamide utilisé pour le procédé B.

**3.** Polyamide modifié selon l'une des revendications 1 à 2 **caractérisé en ce que** la proportion pondérale de composé A dans le mélange des composés A et B est supérieure à 50%.

**4.** Polyamide modifié selon l'une des revendications précédentes **caractérisé en ce que** le mélange en phase fondue

est réalisé dans un dispositif d'extrusion.

5. Polyamide modifié selon l'une des revendications précédentes **caractérisé en ce que** le procédé choisi pour obtenir le composé B est le procédé B, et **en ce que** le mélange en fondu est réalisé dans un dispositif d'extrusion.

6. Polyamide modifié selon l'une des revendications précédentes **caractérise en ce que** le composé multifonctionnel présente une structure arborescente ou dendritique.

7. Polyamide modifié selon l'une des revendications 1 à 6, **caractérisé en ce que** le composé muftgoncdonnai est représenté par la formule (III)

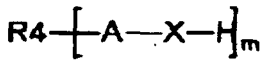 (III)

dans laquelle

- A est une liaison covalente ou un radical hydrocarboné aliphatique pouvant comprendre des hétéroatomes, et comprenant de 1 à 20 atomes de carbone, de préférence de 1 à 6 atomes de carbone.
- X est un radical

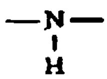 ou 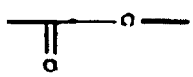

- $R_4$ est un radical hydrocarboné comprenant au moins 2 atomes de carbone, linéaire ou cyclique, aromatique ou aliphatique et pouvant comprendre des hétéroatomes.
- m est un nombre entier compris entre 3 et 8, bornes incluses.

8. Polyamide modifié selon la revendication 7, **caractérisé en ce que** le composé multifonctionnel est choisi parmi la 2,2,6,6-tétra-(β-carboxyéthyl)cyclohexanone, l'acide trimésique, la 2,4,6-tri-(acide amino caproïque)-1,3,5-triazine, la 4-aminoéthyle-1,8-octanediamine.

9. Polyamide modifié selon l'une des revendications 1 à 8, **caractérisé en ce que** le composé A est choisi parmi le polyamide 6, le polyamide 66, leurs copolymères et mélanges.

10. Polyamide modifie selon l'une des revendications précédentes **caractérisé en ce que** composé B est obtenu par le procédé A, le lactame étant le caprolactame, ou par le procédé B, le polyamide étant du polyamide 6.

11. Composition comprenant une matrice et au moins une charge, **caractérisée en ce que** la matrice est un polyamide modifié selon l'une des revendications 1 à 10.

12. Composition selon la revendication 11 **caractérisée en ce que** la charge est choisie parmi les fibres de verre, les fibres de carbone, le kaolin, la wollastonite, le talc.

13. Composition selon l'une des revendications 11 ou 12 **caractérisée en ce que** la proportion pondérale de charge est comprise entre 25 et 80%.

14. Composé macromoléculaire polyamide comprenant des chaînes macromoléculaires étoiles et éventuellement des chaînes macromoléculaires linéaires, susceptible d'être obtenu par copolymérisation d'un lactame et/ou d'un aminoacide avec un composé multifonctionnel et éventuellement des composés bifonctionnels ou monofoncüonnels, le composé multifonctionnel comprenant au moins trois fonctions réactives choisies parmi les amines, les acides carboxyliques, et leurs dérivés, les fonctions réactives étant identiques, la concentration équivalente molaire en fonctions réactives du composé multifonctionnel dans le composé étant supérieure à 8 % ;
ladite concentration, notée α, est définie de la manière suivante :

$$\alpha = f * \frac{m_C / M_C}{0{,}9 * m_L / M_L + m_C / M_C}$$

dans laquelle:

- f est le nombre de fonctions réactives du composé multifonctionnel
- $m_L$ est la masse de lactame et/ou aminoacide
- $m_C$ est la masse de composé multifonctionnel
- $M_L$ est la masse molaire du lactame et/ou aminoadde
- $M_C$ est la masse molaire du composé C.

**15.** Composé macromoléculaire selon la revendication 14 **caractérisé en ce que** l'indice de fluidité en phase fondue mesuré selon la norme ISO 1133 à 275°C sous charge de 100 g est supérieur à 100 g/10 min.

**16.** Composé macromoléculaire selon rune des revendications 14 à 15 **caractérisé en ce que** le composé multifonctionnel est un composé multifonctionnel selon les revendications 7 ou 8.

**17.** Utilisation d'un composé macromoléculaire selon l'une des revendication 14 à 16 dans des compositions polymères.

**Patentansprüche**

**1.** Modifiziertes Polyamid, erhalten durch Vermischen im geschmolzenen Zustand von mindestens den zwei folgenden Verbindungen:

• Verbindung A: einem Polyamid, das wiederkehrende Einheiten aufweist, von denen die Formeln unter den folgenden Formeln (I) und (II) ausgewählt werden:

$$-[NH-R_1-NH-OC-R_2-CO]- \qquad (I)$$

$$-[NH-R_3-CO]- \qquad (II)$$

wobei die Reste $R_1$, $R_2$ und $R_3$ Kohlenwasserstoff-Reste sind, die gegebenenfalls Heteroatome tragen,
• Verbindung B: einer makromolekularen Polyamid-Verbindung, umfassend makromolekulare sternförmige Ketten oder H, die geeignet sind, durch ein Verfahren erhalten zu werden, das unter den zwei folgenden Verfahren ausgewählt wird:

- Verfahren A: Copolymerisation eines Lactams und/oder einer Aminosäure mit einer multifunktionellen Verbindung und gegebenenfalls bifunktionellen oder monofunktionellen Verbindungen,
- Verfahren B: Vermischen im geschmolzenen Zustand von einer multifunktionellen Verbindung und einem Polyamid von dem Typ, der durch Polykondensation von Lactamen und/oder Aminosäuren erhalten wird,

wobei die multifunktionelle Verbindung, die mindestens drei reaktive Funktionen umfaßt, unter den Aminen, den Carbonsäuren und ihren Derivaten ausgewählt wird, die reaktiven Funktionen identisch sind und die molare äquivalente Konzentration an reaktiven Funktionen der multifunktionellen Verbindung in der Verbindung B über 8 % beträgt;
wobei die genannte Konzentration, als $\alpha$ bezeichnet, von den zwei folgenden Arten definiert wird, gemäß dem Verfahren zum Erhalten der Verbindung B:

- Verfahren A:

$$\alpha = f * \frac{m_C / M_C}{0{,}9 * m_L / M_L + m_C / M_C}$$

- Verfahren B:

$$\alpha = f * \frac{m_C / M_C}{m_{PA} / M_{PA} + m_C / M_C}$$

worin

- f die Anzahl von reaktiven Funktionen der multifunktionellen Verbindung ist,
- $m_L$ die Masse des verwendeten Lactams und/oder der Aminosäure ist für das Erhalten der Verbindung B gemäß dem Verfahren A,
- $m_{PA}$ die Masse des verwendeten Polyamids ist für das Erhalten der Verbindung B gemäß dem Verfahren B,
- $m_C$ die Masse der verwendeten multifunktionellen Verbindung ist für das Erhalten der Verbindung B gemäß den Verfahren A oder B,
- $M_L$ die molare Masse des Lactams und/oder der Aminosäure ist,
- $M_{PA}$ die molare Masse einer wiederkehreriden Einheit des verwendeten Polyamids ist für das Erhalten der Verbindung B gemäß dem Verfahren B,
- $M_C$ die molare Masse der Verbindung C ist.

2. Modifiziertes Polyamid nach Anspruch 1, **dadurch gekennzeichnet, daß** die molare äquivalente Konzentration an reaktiven Funktionen der multifunktionellen Verbindung im Verhältnis zu den Verbindungen A und B über 1 % beträgt; wobei die genannte Konzentration, als β bezeichnet, von den zwei folgenden Arten definiert wird, gemäß dem Verfahren zum Erhalten der Verbindung B:

$$\beta = \frac{\alpha * m_B / M_B}{m_A / M_A + m_B / M_B}$$

worin

- $m_B$ und $m_A$ jeweils die Massen der Verbindungen B und A sind,
- $M_A$ eine charakteristische molare Masse der Verbindung A ist, wobei $M_A$ gleich der molaren Masse einer wiederkehrenden Einheit des durch die Formel (II) dargestellten Polyamids und $M_A$ gleich der Hälfte der molaren Masse einer wiederkehrenden Einheit des durch die Formel (I) dargestellten Polyamids ist,
- $M_B$ eine charakteristische molare Masse der Verbindung B ist, wobei $M_B$ gleich der molaren Masse der wiederkehrenden Einheit ist, die dem für das Verfahren A verwendeten Lactam und/oder der Aminosäure entspricht, und $M_B$ gleich der molaren Masse einer wiederkehrenden Einheit des für das Verfahren B verwendeten Polyamids ist.

3. Modifiziertes Polyamid nach einem der Ansprüche 1 bis 2, **dadurch gekennzeichnet, daß** das gewichtsmäßige Verhältnis der Verbindung A in der Mischung der Verbindungen A und B über 50 % beträgt.

4. Modifiziertes Polyamid nach einem der vorstehenden Ansprüche, **dadurch gekennzeichnet, daß** das Vermischen in geschmolzener Phase in einer Extrusionsvorrichtung realisiert wird.

**5.** Modifiziertes Polyamid nach einem der vorstehenden Ansprüche, **dadurch gekennzeichnet, daß** das ausgewählte Verfahren zum Erhalten der Verbindung B das Verfahren B ist, und daß das Vermischen im geschmolzenen Zustand in einer Extrusionsvorrichtung realisiert wird.

**6.** Modifiziertes Polyamid nach einem der vorstehenden Ansprüche, **dadurch gekennzeichnet, daß** die multifunktionelle Verbindung eine baumartige oder dendritische Struktur aufweist.

**7.** Modifiziertes Polyamid nach einem der Ansprüche 1 bis 6, **dadurch gekennzeichnet, daß** die multifunktionelle Verbindung durch die Formel (III)

$$R_4-\left[-A-X-H\right]_m \qquad (III)$$

dargestellt wird, in der

- A eine kovalente Bindung oder ein aliphatischer Kohlenwasserstoff-Rest ist, der Heteroatome umfassen kann und 1 bis 20 Kohlenstoffatome, vorzugsweise 1 bis 6 Kohlenstoffatome umfasst,
- X ein Rest

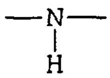 oder 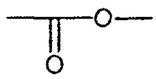

ist,
- $R_4$ ein linearer oder cyclischer, aromatischer oder aliphatischer Kohlenwasserstoff-Rest ist, der mindestens 2 Kohlenstoffatome umfaßt und Heteroatome umfassen kann,
- m eine ganze Zahl zwischen einschließlich 3 und 8 ist, Grenzwerte eingeschlossen.

**8.** Modifiziertes Polyamid nach Anspruch 7, **dadurch gekennzeichnet, daß** die multifunktionelle Verbindung ausgewählt wird unter 2,2,6,6-Tetra-(β-carboxyethyl)-cyclohexanon, Trimesinsäure, 2,4,6-Tri-(aminocapronsäure)-1,3,5-triazin, 4-Aminoethyl-1,8-octandiamin.

**9.** Modifiziertes Polyamid nach einem der Ansprüche 1 bis 8, **dadurch gekennzeichnet, daß** die Verbindung A ausgewählt wird unter Polyamid 6, Polyamid 66, ihren Copolymeren und ihren Mischungen.

**10.** Modifiziertes Polyamid nach einem der vorstehenden Ansprüche, **dadurch gekennzeichnet, daß** die Verbindung B durch das Verfahren A erhalten wird und das Lactam Caprolactam ist, oder durch das Verfahren B erhalten wird und das Polyamid Polyamid 6 ist.

**11.** Zusammensetzung, umfassend eine Matrix und mindestens einen Füllstoff, **dadurch gekennzeichnet, daß** die Matrix ein modifiziertes Polyamid nach einem der Ansprüche 1 bis 10 ist.

**12.** Zusammensetzung nach Anspruch 11, **dadurch gekennzeichnet, daß** der Füllstoff ausgewählt wird unter Glasfasern, Kohlenstoffasern, Kaolin, Wollastonit und Talk.

**13.** Zusammensetzung nach einem der Ansprüche 11 oder 12, **dadurch gekennzeichnet, daß** das gewichtsmäßige Verhältnis des Füllstoffes zwischen einschließlich 25 % und 80 % beträgt.

**14.** Makromolekulare Polyamid-Verbindung, umfassend makromolekulare sternförmige Ketten und gegebenenfalls makromolekulare lineare Ketten, die geeignet ist, durch Copolymerisation eines Lactams und/oder einer Aminosäure mit einer multifunktionellen Verbindung und gegebenenfalls bifunktionellen oder monofunktionellen Verbindungen erhalten zu werden, wobei die multifunktionelle Verbindung mindestens drei reaktive Funktionen umfaßt, ausgewählt unter den Aminen, den Carbonsäuren und ihren Derivaten, die reaktiven Funktionen identisch sind und die molare äquivalente Konzentration an reaktiven Funktionen der multifunktionellen Verbindung in der Verbindung über 8 % beträgt;

wobei die genannte Konzentration, als α bezeichnet, in der folgenden Art und Weise definiert wird:

$$\alpha = f * \frac{m_C / M_C}{0{,}9 * m_L / M_L + m_C / M_C}$$

worin

- f die Anzahl von reaktiven Funktionen der multifunktionellen Verbindung ist,
- $m_L$ die Masse des Lactams und/oder der Aminosäure ist,
- $m_C$ die Masse der multifunktionellen Verbindung ist,
- $M_L$ die molare Masse des Lactams und/oder der Aminosäure ist,
- $M_C$ die molare Masse der Verbindung C ist.

**15.** Makromolekulare Verbindung nach Anspruch 14, **dadurch gekennzeichnet, daß** der Fluiditätsindex in geschmolzener Phase, gemessen nach der Norm ISO 1133 bei 275 °C unter einer Last von 100 g über 100 g/10 min beträgt.

**16.** Makromolekulare Verbindung nach einem der Ansprüche 14 bis 15, **dadurch gekennzeichnet, daß** die multifunktionelle Verbindung eine multifunktionelle Verbindung nach Anspruch 7 oder 8 ist.

**17.** Verwendung einer makromolekularen Verbindung nach einem der Ansprüche 14 bis 16 in polymeren Zusammensetzungen.

## Claims

**1.** Modified polyamide obtained by melt-blending at least the following two compounds:

• Compound A: a polyamide containing repeating units whose formulae are chosen from formulae (I) and (II) below:

- [NH-$R_1$-NH-OC-$R_2$-CO] - (I)

-[NH-$R_3$-CO]- (II)

the radicals $R_1$, $R_2$ and $R_3$ being hydrocarbon-based radicals optionally comprising hetero atoms
• Compound B: a polyamide macromolecular compound comprising starburst or H macromolecular chains, which may be obtained by a process chosen from the following two processes:

- Process A: copolymerization of a lactam and/or of an amino acid with a multifunctional compound and optionally bifunctional or monofunctional compounds,
- Process B: melt-blending of a multifunctional compound and a polyamide of the type obtained by polycondensation of lactams and/or of amino acids,
the multifunctional compound comprising at least three reactive functions chosen from amines, carboxylic acids and derivatives thereof, the reactive functions being identical, the equivalent molar concentration of reactive functions of the multifunctional compound in compound B being greater than 8%;

the said concentration magnitude, written as α, is defined in the following two ways, depending on the process for obtaining compound B:
- Process A:

$$\alpha = f * \frac{m_C / M_C}{0.9 * m_L / M_L + m_C / M_C}$$

- Process B:

$$\alpha = f * \frac{m_C / M_C}{m_{PA} / M_{PA} + m_C / M_C}$$

in which:

- f is the number of reactive functions in the multifunctional compound
- $m_L$ is the mass of lactam and/or amino acid used to obtain compound B according to process A
- $m_{PA}$ is the mass of polyamide used to obtain compound B according to process B
- $m_C$ is the mass of multifunctional compound used to obtain compound B according to processes A or B
- $M_L$ is the molar mass of the lactam and/or amino acid
- $M_{PA}$ is the molar mass of a repeating unit in the polyamide used to obtain compound B according to process B
- $M_C$ is the molar mass of compound C.

2. Modified polyamide according to Claim 1, **characterized in that** the equivalent molar concentration of reactive functions of the multifunctional compound relative to compounds A and B is greater than 1%;
the said concentration written as β, is defined in the following two ways, depending on the process for obtaining compound B:

$$\beta = \frac{\alpha * m_B / M_B}{m_A / M_A + m_B / M_B}$$

in which

- $m_B$ and $m_A$ are, respectively, the masses of compounds B and A
- $M_A$ is a characteristic molar mass of compound A, $M_A$ being equal to the molar mass of a repeating unit of polyamide represented by formula (II), $M_A$ being equal to half the molar mass of a repeating unit of polyamide represented by formula (I)
- $M_B$ is a characteristic molar mass of compound B, $M_B$ being equal to the molar mass of the repeating unit corresponding to lactam and/or amino acid used for process A, $M_B$ being equal to the molar mass of a repeating unit of polyamide used for process B.

3. Modified polyamide according to either of Claims 1 and 2, **characterized in that** the weight proportion of compound A in the blend of compounds A and B is greater than 50%.

4. Modified polyamide according to one of the preceding claims, **characterized in that** the melt-blending is performed in an extrusion device.

5. Modified polyamide according to one of the preceding claims, **characterized in that** the process chosen to obtain compound B is process B, and **in that** the melt-blending is performed in an extrusion device.

**6.** Modified polyamide according to one of the preceding claims, **characterized in that** the multifunctional compound has an arborescent or dendritic structure.

**7.** Modified polyamide according to one of Claims 1 to 6, **characterized in that** the multifunctional compound is represented by formula (III)

$$R4 \left[ A - X - H \right]_m \qquad (III)$$

in which

- A is a covalent bond or an aliphatic hydrocarbon-based radical possibly containing hetero atoms, and containing from 1 to 20 carbon atoms and preferably from 1 to 6 carbon atoms;
- X is a radical

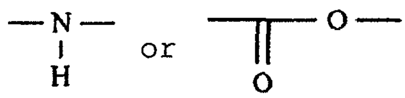

- $R_4$ is a linear or cyclic, aromatic or aliphatic hydrocarbon-based radical containing at least two carbon atoms and possibly containing hetero atoms;
- m is an integer between 3 and 8, limits included.

**8.** Modified polyamide according to Claim 7, **characterized in that** the multifunctional compound is chosen from 2,2,6,6-tetra(β-carboxyethyl)cyclohexanone, trimesic acid, 2,4,6-tri(aminocaproic acid)-1,3,5-triazine and 4-aminoethyl-1,8-octanediamine.

**9.** Modified polyamide according to one of Claims 1 to 8, **characterized in that** compound A is chosen from polyamide-6 and polyamide-66, and copolymers and blends thereof.

**10.** Modified polyamide according to one of the preceding claims, **characterized in that** compound B is obtained by process A, the lactam being caprolactam, or by process B, the polyamide being polyamide-6.

**11.** Composition comprising a matrix and at least one filler, **characterized in that** the matrix is a modified polyamide according to one of Claims 1 to 10.

**12.** Composition according to Claim 11, **characterized in that** the filler is chosen from glass fibres, carbon fibres, kaolin, wollastonite and talc.

**13.** Composition according to either of Claims 11 and 12, **characterized in that** the weight proportion of filler is between 25% and 80%.

**14.** Polyamide macromolecular compound comprising starburst macromolecular chains and possibly linear macromolecular chains, which can be obtained by copolymerization of a lactam and/or of an amino acid with a multifunctional compound and optionally bifunctional or monofunctional compounds, the multifunctional compound comprising at least three reactive functions chosen from amines, carboxylic acids, and derivatives thereof, the reactive functions being identical, the equivalent molar concentration of reactive functions of the multifunctional compound in the compound being greater than 8%;
the said concentration, written as $\alpha$, is defined in the following way:
in which:

- f is the number of reactive functions in the multifunctional compound
- $m_L$ is the mass of lactam and/or amino acid
- $m_C$ is the mass of multifunctional compound
- $M_L$ is the molar mass of the lactam and/or amino acid

- $M_C$ is the molar mass of compound C.

**15.** Macromolecular compound according to Claim 14, **characterized in that** the melt flow index, measured according to standard ISO 1133 at 275°C under a 100 g load, is greater than 100 g/10 min.

**16.** Macromolecular compound according to either of Claims 14 and 15, **characterized in that** the multifunctional compound is a multifunctional compound according to Claim 7 or 8.

**17.** Use of a macromolecular compound according to one of Claims 14 to 16 in polymer compositions.